# EUROPÄISCHE PATENTSCHRIFT

(11) **EP 2 508 384 B1**
(45) Veröffentlichungstag und Bekanntmachung des Hinweises auf die Patenterteilung: **27.11.2013**
(21) Anmeldenummer: 12000226.6
(22) Anmeldetag: 17.01.2012
(51) Int. Cl.: B60K 37/00

(54) **Leuchtvorrichtung mit geschlossener Form für ein Kraftfahrzeug**
Lighting device with closed form for a motor vehicle
Dispositif d'éclairage doté d'une forme fermée pour un véhicule automobile

(30) Priorität: 04.04.2011 DE 102011016002
(43) Veröffentlichungstag der Anmeldung: 10.10.2012
(73) Patentinhaber: Audi AG, 85045 Ingolstadt (DE)
(72) Erfinder: Reuschel, Jens Dietmar, 85053 Ingolstadt (DE); Schmitz, Christoph, 93326 Abensberg (DE)
(74) Vertreter: Thielmann, Frank

(56) Entgegenhaltungen:
- WO-A1-2010/061318
- WO-A2-2008/029347
- DE-A1- 10 153 543
- DE-A1-102004 047 653
- DE-T2- 60 031 397

## Beschreibung

Die vorliegende Erfindung betrifft eine Leuchtvorrichtung für ein Kraftfahrzeug mit einem Lichtleiter und einer Lichtquelle, die an ein Ende des Lichtleiters gekoppelt ist, um Licht in den Lichtleiter einzuspeisen. Darüber hinaus betrifft die vorliegende Erfindung ein Kraftfahrzeug mit einer derartigen Leuchtvorrichtung. Des weiteren bezieht sich die vorliegende Erfindung auf ein Assistenzsystem für ein Kraftfahrzeug, das ebenfalls eine derartige Leuchtvorrichtung aufweist.

Kraftfahrzeuge besitzen zur Ausleuchtung des Innenraums in der Regel mehrere Leuchten beziehungsweise Leuchtvorrichtungen. Meist handelt es sich dabei um Lämpchen, die an- oder abgeschaltet werden können. Sie dienen in der Regel nicht dazu, zusätzlich Information zu transportieren, die der Fahrzeuginsasse optisch wahrnehmen könnte.

Außerdem besitzen moderne Fahrzeuge zahlreiche Assistenzsysteme. Zum einen soll der Fahrer beim Führen des Fahrzeugs unterstützt werden (z. B. Spurassistent, Überholwarner, Abstandswarner etc.) und zum anderen können auch Beifahrer gewarnt werden (z. B. Warnung vor einem vorbeifahrenden Fahrrad beim Aussteigen). Diese Assistenzsysteme liefern meist optische Hinweise beziehungsweise Warnungen. Daher ist es wichtig, diese optischen Hinweise und Warnungen an Stellen zu geben, die sich in der Blickrichtung des Insassen befinden.

Aus der gattungsgemäßen Druckschrift DE 600 31 397 T2 ist eine Lichtabzweigungsvorrichtung für Lichtleiterlampen bekannt. Dabei wird ein Lichtextraktor koaxial in einen Lichtleiter der Lichtleiterlampe eingefügt. Eine Diffusionsfläche des Lichtextraktors ist bezüglich der Richtung der Längsachse teilweise geneigt. Der Lichtleiter weist ein transparentes Rohr auf, das aus einem starren Material hergestellt ist, wie beispielsweise Polykarbonat.

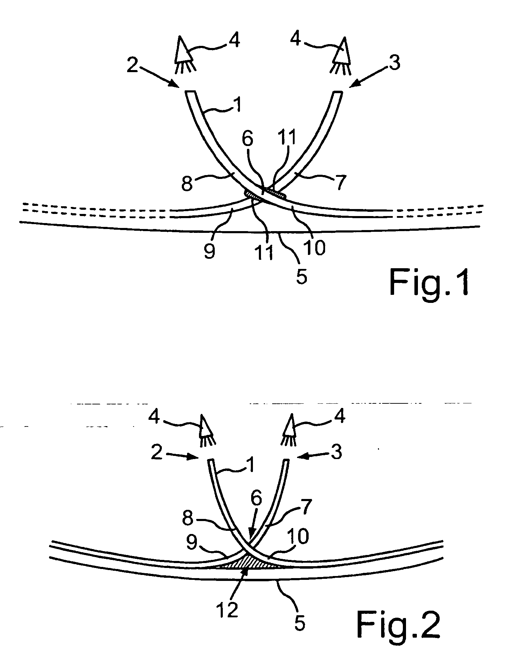

Werden in einem Fahrzeug Lichtleiter verbaut, so erstrecken sie sich meist linear, gegebenenfalls auch mit einer Krümmung. Sollen hingegen runde Objekte, z. B. das Lenkrad, beleuchtet werden, so ist es wünschenswert, eine entsprechende geschlossene Form (z. B. geschlossener Kreis) mit dem Lichtleiter zu realisieren. Da Lichtleiter im günstigsten Fall als Fasern hergestellt werden, an deren Ende eine Lichtquelle zum Einkoppeln von Licht angeordnet ist, können damit nur "quasigeschlossene" Formen realisiert werden. Sie erscheinen dann in einer Blickrichtung (z. B. senkrecht auf das Lenkrad) als geschlossen. Tatsächlich liegen dann aber zwei Abschnitte des Lichtleiters in Blickrichtung übereinander (vergleiche Fig. 1). Die Abschnitte des Lichtleiters bilden dort eine Kreuzung. Im Bereich der Kreuzung erscheint das Lichtleitergebilde heller, da praktisch zwei Lichtleiterabschnitte, die jeweils für sich Licht imitieren, hintereinander beziehungsweise knapp nebeneinander liegen. Diese Inhomogenität führt nicht zu einem hochwertigen Eindruck.

Alternativ können die Lichtleiterabschnitte im Bereich der Kreuzung auch so stark gebogen werden, dass die Kreuzung selbst hinter einer Blende liegt (vergliche Fig. 2). Dies hat aber den Nachteil, das im Bereich der Kreuzung eine Dunkelstelle entsteht, da der Lichtleiter im Bereich der Kreuzung aus dem sichtbaren Bereich heraus gebogen ist. Es entsteht hier also ebenfalls eine Inhomogenität, die nicht wünschenswert ist.

Die Aufgabe der vorliegenden Erfindung besteht somit darin, eine Leuchtvorrichtung vorzuschlagen, bei der mithilfe eines Lichtleiters in geschlossener Form eine homogene Lichtabstrahlung realisiert ist.

Erfindungsgemäß wird diese Aufgabe gelöst durch eine Leuchtvorrichtung für ein Kraftfahrzeug mit
- einem Lichtleiter und
- einer Lichtquelle, die an ein Ende des Lichtleiters gekoppelt ist, um Licht in den Lichtleiter einzuspeisen, wobei
- der Lichtleiter zumindest in einer Draufsicht eine geschlossene Form bildet und sich hierzu zwei Abschnitte des Lichtleiters an einer Kreuzung kreuzen, und
- ein Anpasselement an der Kreuzung angeordnet ist, mit dem eine Lichtintensität, die in einer Richtung entgegen der Draufsicht messbar ist, in einem Bereich der Kreuzung an diejenige Lichtintensität eines anderen Abschnitts des Lichtleiters anpassbar ist.

In vorteilhafter Weise ist also in dem Kreuzungsbereich des Lichtleiters ein Anpasselement vorgesehen, das eine Anpassung der Lichtintensität an die Lichtintensität eines anderen, insbesondere benachbarten, Abschnitts des Lichtleiters vornimmt. Damit ergibt sich über die gesamte geschlossene Form ein homogener Lichteindruck, d. h. eine homogene Lichtverteilung.

Vorzugsweise entspricht die geschlossene Form einem Kreisring. Darunter wird hier auch generell die Form eines üblichen Lenkrads verstanden. Unabhängig davon können aber auch andere geschlossene Formen, wie beispielsweise abgerundete Vielecke, Achten usw. mit faserförmigen Lichtleitern mit homogener Lichtabstrahlung realisiert werden.

Speziell kann der Lichtleiter, wie soeben angedeutet wurde, aus einem länglichen Material bestehen, das in die geschlossene Form gebogen ist. Ein derartiger Lichtleiter wäre beispielsweise eine Lichtleiterfaser mit rundem oder mehreckigem Querschnitt. Es muss dann nicht für jede gewünschte Form ein separates Kunststoffteil hergestellt werden. Vielmehr werden die gewünschten Formen eben durch Biegen erreicht.

In einer speziellen Ausführungsform wird nicht nur an dem einen Ende des Lichtleiters Licht eingekoppelt, sondern es ist auch an dem anderen Ende des Lichtleiters eine zweite Lichtquelle angeordnet, um dort Licht einzukoppeln. Dies ist deshalb von Vorteil, da der Lichtleiter, damit er die gewünschte Abstrahlung erzielt, aus einem teiltransparenten Material (deutlich reduzierte Transmission) ist, sodass die Lichtstärke im Inneren des Lichtleiters mit der Entfernung von der Lichtquelle abnimmt. Daher ist es günstig, von beiden Seiten in den Lichtleiter Licht einzukoppeln, insbesondere wenn dieser eine gewisse Länge überschreitet. Dann überlagern sich die Lichtstärken im Inneren des Lichtleiters additiv.

Als Lichtquelle an der einen oder an beiden Seiten des Lichtleiters kann jeweils eine LED eingesetzt werden. Mit ihr kann energieeffizient intensives Licht erzeugt werden. Gegebenfalls können auch mehrfarbige LEDs verwendet werden, um beispielsweise weißes Licht für einfache Beleuchtung und rotes Licht für Warnhinweise zu erzeugen.

In einer Ausführungsform deckt das Anpasselement den in Draufsicht unten liegenden Abschnitt des Lichtleiters an der Kreuzung ab. Damit liefert der unten liegende Abschnitt des Lichtleiters im Bereich der Kreuzung keinen Helligkeitsbeitrag in der Draufsicht. Speziell ist es günstig, für ein derartiges Anpasselement eine Folie zu verwenden. Diese kann leicht zwischen die sich kreuzenden Abschnitte des Lichtleiters eingebracht werden. Vorzugsweise ist die Folie schwarz, sodass die Folie selbst nicht leuchtet, wenn sie von dem oben liegenden Abschnitt des Lichtleiters angestrahlt wird. Die schwarze Folie liefert also auch keinen Helligkeitsbeitrag im Bereich der Kreuzung. Damit ergibt sich ein besonders homogener Helligkeitseindruck über die gesamte geschlossene Form.

Entsprechend einer alternativen Ausführungsform ist das Anpasselement teiltransparent und verbindet zwei Abschnitte des Lichtleiters, die in der Nähe der Kreuzung liegen, miteinander. Mit diesem teiltransparenten Anpasselement ergibt sich, wenn es entsprechend an die beiden Abschnitte des Lichtleiters angeschmiegt ist, tatsächlich eine geschlossene Form. Es wird dabei im Bereich der Kreuzung Licht aus den Lichtleiterabschnitten in das teiltransparente Anpasselement ausgekoppelt. Da das Anpasselement selbst teiltransparent ist, leuchtet es entsprechend. Bei günstiger Geometrie und geeigneten Teiltransparenz kann somit wieder eine homogene Leuchterscheinung in geschlossener Form erzielt werden.

Eine spezielle Anwendung der oben geschilderten Leuchtvorrichtung kann darin gesehen werden, ein Lenkrad mit dieser Leuchtvorrichtung auszustatten. Allgemein kann auch ein Assistenzsystem für ein Kraftfahrzeug mit einer solchen Leuchtvorrichtung versehen werden, um einen optischen Hinweis und insbesondere einen Warnhinweis für einen Fahrzeuginsassen beziehungsweise Fahrer zu erzeugen. Somit kann beispielsweise auch das Lenkrad für optische Warnhinweise verwendet werden.

Die vorliegende Erfindung wird nun anhand der beigefügten Zeichnungen näher erläutert, in denen zeigen:
- Fig. 1: eine Leuchtvorrichtung mit kreuzendem Lichtleiter gemäß einer ersten Ausführungsform und
- Fig. 2: eine Leuchtvorrichtung mit kreuzendem Lichtleiter gemäß einer zweiten Ausführungsform der vorliegenden Erfindung.

Die nachfolgend näher geschilderten Ausführungsbeispiele stellen bevorzugte Ausführungsformen der vorliegenden Erfindung dar.

In einem Fahrzeug wird beispielsweise an einem Lenkrad eine Leuchtvorrichtung mit geschlossener Form (z. B. geschlossener Kreisring) verbaut. Die Leuchtvorrichtung besitzt einen Lichtleiter 1 (vergleiche Fig. 1), der beispielsweise aus einer wenige Millimeter starken Lichtleitfaser besteht. Das Material der Lichtleitfaser ist teiltransparent, sodass es, wenn Licht in ihre Stirnseite eingekoppelt wird, entsprechend leuchtet.

In dem konkreten Beispiel von Fig. 1 liegt also eine teiltransparente Lichtleitfaser 1 mit einem ersten Ende 2 und einem zweiten Ende 3 vor. In jedes der beiden Enden 2, 3 wird an der jeweiligen Stirnseite mit einer Lichtquelle 4 Licht eingekoppelt. Bei den Lichtquellen kann es sich beispielsweise um LEDs handeln. Grundsätzlich können dafür aber auch andere Leuchtelemente wie Glühlampen verwendet werden. Ebenso können einfarbige oder mehrfarbige Lichtquellen eingesetzt werden.

Die Lichtquellen 4 werden von einer Steuereinrichtung (in Fig. 1 nicht dargestellt), angesteuert. Damit können sie beispielsweise an- und abgeschaltet oder gedimmt werden. Bei mehrfarbigen Lichtquellen werden zur Erzeugung der gewünschten Farbe mit der Steuereinrichtung die gewünschten Einzellichtquellen angesteuert.

In Fig. 1 ist angedeutet, dass der Lichtleiter 1 in einem Lenkrad 5 verlegt wird. Fig. 1 zeigt vergrößert nur den Abschnitt, in dem sich der Lichtleiter, der das Lenkrad vollständig umläuft, kreuzt. Es ist also ein Kreuzungsbereich 6 zu erkennen, in dem bei Draufsicht ein erster Abschnitt 7 des Lichtleiters 1 unten und ein zweiter Abschnitt 8 oben verläuft. In Faserlängsrichtung unmittelbar anschließend an den ersten Abschnitt 7 befindet sich in der Nähe des Kreuzungsbereichs 6 ein dritter Abschnitt 9 des Lichtleiters 1. Ebenso befindet sich in Faserlängsrichtung unmittelbar angrenzend an den zweiten Abschnitt des Lichtleiters 1 in der Nähe des Kreuzungsbereichs 6 ein vierter Abschnitt 10 des Lichtleiters 1. Der gesamte Lichtleiter 1 besitzt also von seinem ersten Ende 2 bis zu seinem zweiten Ende 3 folgende Abschnitte: einen nicht näher bezeichneten Abschnitt vom ersten Ende 2 bis zu dem zweiten Abschnitt 8 im Kreuzungsbereich 6, einen unmittelbar anschließenden vierten Abschnitt 10, einen in der Fig. 1 nur gestrichelt angedeuteten Abschnitt, der das Lenkrad 5 umläuft, einen anschließenden dritten Abschnitt 9 kurz vor dem Kreuzungsbereich 6, einem unmittelbar anschließenden, unten liegenden ersten Abschnitt 7 und einen von hier weiterführenden, nicht näher bezeichneten Abschnitt bis zum zweiten Ende 3.

Nachdem der erste Abschnitt 7 und der zweite Abschnitt 8 in dem Kreuzungsbereich 6 in der Draufsicht übereinander liegen, würden sie eine Lichterscheinung mit erhöhter Lichtintensität bewirken gegenüber anderen Abschnitten des Lichtleiters 1. Es wird hier vereinfacht von Lichtintensitäten gesprochen, wo eigentlich von Leuchtdichte bezogen auf eine Längeneinheit des Lichtleiters gesprochen werden müsste.

Um diese erhöhte Lichtintensität im Kreuzungsbereich 6 zu vermeiden, ist eine schwarze Folie 11 zwischen den ersten Abschnitt 7 und den zweiten Abschnitt 8 des Lichtleiters 1 eingefügt. Der Deutlichkeit halber ist diese Folie 11 in Fig. 1 etwas größer dargestellt. Sie wird jedoch so bemessen sein, dass sie in der Draufsicht im Wesentlichen vollständig hinter dem oben liegenden zweiten Abschnitt 8 des Lichtleiters 1 im Kreuzungsbereich 6 liegt. Damit ist gewährleistet, dass in der Draufsicht im Kreuzungsbereich 6 nur der obere Abschnitt 8 zu der Leuchterscheinung beiträgt, während der unten liegende Abschnitt 7 abgeschattet wird. Es ergibt sich damit in dem Kreuzungsbereich 6 eine homogene Lichterscheinung, d. h. in jedem sichtbaren Abschnitt des Lichtleiters wird gleichviel Licht abgestrahlt (konstante Leuchtdichte bzw. homogene Lichtverteilung).

Fig. 2 zeigt ein weiteres Ausführungsbeispiel der folgenden Erfindung. Die Abschnitte des Lichtleiters 1 sind hier genauso bezeichnet wie in Fig. 1. Diesbezüglich wird daher auf die Beschreibung von Fig. 1 verwiesen. Der Lichtleiter 1 ist hier jedoch so in das Lenkrad integriert, dass der Kreuzungsbereich 6 nicht sichtbar ist. Dazu sind die Abschnitte 9 und 10 kurz vor beziehungsweise nach dem Kreuzungsbereich 6 stark gebogen. Damit der Bereich zwischen den Abschnitten 9 und 10 nicht dunkel erscheint, ist hier ein transparentes Anpasselement an die Lichtleiterabschnitte 9 und 10 angefügt. Aus diesen beiden Abschnitten 9 und 10 wird Licht in das teiltransparente Anpasselement 12 eingekoppelt. Daher leuchtet es im eingeschalteten Zustand ebenso wie die anderen Abschnitte des Lichtleiters 1. Das teiltransparente Anpasselement besteht beispielsweise aus PMMA (= Polymehtylmethacrylat). Es verbindet die Abschnitte 9 und 10 direkt und bildet die geschlossene Form im Kreuzungsbereich weiter. Somit kann auch hierdurch eine geschlossene, leuchtende Form erhalten werden. Die Homogenität im Kreuzungsbereich 6 wird insbesondere dadurch erzielt, dass im Bereich der Abschnitte 9 und 10 die Geometrie des transparenten Anpasselements 12 so gewählt wird, dass in passender Weise Licht aus den Lichtleitern in das Anpasselement 12 ausgekoppelt wird. Darüber hinaus wird die Transparenz bzw. Transmission des Anpasselements 12 entsprechend eingestellt.

In der Summe der ausgekoppelten Lichtmengen ergibt sich dann ein homogener Lichtkranz. Zur Einstellung der Teiltransparenz wird die Oberfläche des Anpasselements 12 poliert oder aufgeraut. Je mehr Licht durch das Anpasselement 12 nach außen ausgekoppelt werden soll, desto weniger wird seine Oberfläche poliert.

Mit dem homogenen Lichtkranz kann beispielsweise das Lenkrad weiß beleuchtet werden. Soll der Fahrer vor einer Gefahr gewarnt werden, so wird das Lenkrad beispielsweise rundum homogen rot beleuchtet. Die homogene Leuchterscheinung kann somit auch für eine Warnfunktion genutzt werden.

Die Warnfunktion kann allgemein dadurch realisiert werden, dass eine Steuervorrichtung ein Signal überprüft. Erfüllt das Signal eine vorgegebene Bedingung, so steuert die Steuervorrichtung eine dafür vorgesehene Leuchtvorrichtung an. Die Leuchtvorrichtung besitzt den Aufbau, wie er oben geschildert wurde.

Wamfunktionen sind, wie oben bereits angedeutet wurde, insbesondere für Fahrerassistenzsysteme hilfreich. So kann die obige Leuchtvorrichtung beispielsweise für einen "Abstandswarner" eingesetzt werden. Der "Abstandswarner" kontrolliert ständig, ob ein bestimmter Abstand zum Vordermann eingehalten wird. Die Kontrolle erfolgt beispielsweise mittels Radar. Wird ein Mindestabstand unterschritten, so muss der Fahrer in geeigneter Weise gewarnt werden. Dies kann hier beispielsweise mittels der geschilderten Leuchtvorrichtung unterhalb der Windschutzscheibe, am Armaturenbrett oder dergleichen erfolgen.

Die erfindungsgemäße Leuchtvorrichtung kann auch für ein Fahrerassistenzsystem "Überholwarner" genutzt werden. Dabei tastet beispielsweise ein Radarstrahl den hinteren Bereich eines Kraftfahrzeugs ab. Wird ein überholendes Fahrzeug festgestellt und hat das eigene Fahrzeug den Blinker auf die Spur des überholenden Fahrzeugs gesetzt oder wird ein Lenkwinkel des eigenen Fahrzeugs in Richtung auf die Spur des überholenden Fahrzeugs registriert, so kann eine entsprechende Überholwarnung optisch abgegeben werden. Dies erfolgt beispielsweise dadurch, dass ein Lauflicht an der Innenseite der Tür an der Seite des überholenden Fahrzeugs einen Überholvorgang andeutet. Beispielsweise kann dies durch ein rotes Lauflicht erfolgen, das sich in Fahrtrichtung nach vorne bewegt.

Eine weitere Anwendungsmöglichkeit der erfindungsgemäßen Leuchtvorrichtung bei einem Assistenzsystem wäre der Einsatz bei einem "Ausstiegsassistenten". Hält das Fahrzeug beispielsweise neben einem Fahrradweg an, und ein Insasse will aussteigen, so kann mit einer entsprechenden Beleuchtung der Tür angezeigt werden, ob ein gefahrloses Öffnen der Tür möglich ist oder nicht. Wenn keine Gefahr besteht, so kann die Tür beispielsweise umlaufend innen grün beleuchtet werden, während sie bei Gefahr, d. h. beispielsweise bei einem sich nähernden oder bei einem vorbeifahrenden Fahrrad, rot leuchtet.

Auch andere Fahrerassistenzsysteme können mit der erfindungsgemäßen Leuchtvorrichtung ausgestattet werden. Dabei kann die Leuchtvorrichtung in der Fläche sehr groß ausgebildet sein, da sie bei Nichtgebrauch ein hochwertiges Dekorelement darstellt.

## Patentansprüche

1. Leuchtvorrichtung für ein Kraftfahrzeug mit
- einem Lichtleiter (1) und
- einer Lichtquelle (4), die an ein Ende (2) des Lichtleiters (1) gekoppelt ist, um Licht in den Lichtleiter (1) einzuspeisen,
**dadurch gekennzeichnet, dass**
- der Lichtleiter (1) zumindest in einer Draufsicht eine geschlossene Form bildet und sich hierzu zwei Abschnitte (7, 8) des Lichtleiters an einer Kreuzung (6) kreuzen, und
- ein Anpasselement (11, 12) an der Kreuzung (6) angeordnet ist, mit dem eine Lichtintensität, die in einer Richtung entgegen der Draufsicht messbar ist, in einem Bereich der Kreuzung (6) an diejenige Lichtintensität eines anderen Abschnitts des Lichtleiters anpassbar ist.

2. Leuchtvorrichtung nach Anspruch 1, wobei die geschlossene Form einem Kreisring entspricht.

3. Leuchtvorrichtung nach Anspruch 1 oder 2, wobei der Lichtleiter (1) aus einem länglichen Material besteht, das in die in der Draufsicht geschlossene Form gebogen ist.

4. Leuchtvorrichtung nach einem der vorhergehenden Ansprüche, wobei an dem anderen Ende (3) des Lichtleiters (1) eine zweite Lichtquelle angeordnet ist, um dort Licht einzukoppeln.

5. Leuchtvorrichtung nach einen der vorhergehenden Ansprüche, wobei als Lichtquelle (4) eine LED eingesetzt ist.

6. Leuchtvorrichtung nach einem der vorhergehenden Ansprüche, wobei das Anpasselement (11, 12) den in Draufsicht unten liegenden Abschnitt (7) des Lichtleiters (1) an der Kreuzung (6) abdeckt.

7. Leuchtvorrichtung nach Anspruch 6, wobei das Anpasselement (11, 12) eine Folie umfasst.

8. Leuchtvorrichtung nach einem der Ansprüche 1 bis 5, wobei das Anpasselement (11, 12) teiltransparent ist und zwei Abschnitte (9, 10) des Lichtleiters (1), die in der Nähe der Kreuzung (6) liegen, miteinander verbindet.

9. Lenkrad für ein Kraftfahrzeug mit einer Leuchtvorrichtung nach einem der vorhergehenden Ansprüche.

10. Assistenzsystem für ein Kraftfahrzeug mit einer Leuchtvorrichtung nach einem der Ansprüche 1 bis 8 zum Erzeugen eines optischen Hinweises, insbesondere eines Wamhinweises.

## Claims

1. Lighting device for a motor vehicle, comprising
- a light guide (1) and
- a light source (4) coupled to one end (2) of the light guide (1) to feed light into the light guide (1),
**characterised in that**
- the light guide (1) forms a closed shape at least in plan view and for this purpose two portions (7, 8) of the light guide cross at a crossover (6), and
- an adapter (11, 12) is arranged at the crossover (6), by means of which adapter a light intensity, measurable in a direction counter to the plan view, can be adapted to the light intensity of another portion of the light guide in a region of the crossover (6).

2. Lighting device according to claim 1, wherein the closed shape corresponds to a circular ring.

3. Lighting device according to either claim 1 or claim 2, wherein the light guide (1) is made of an elongated material which is bent into the closed shape as seen in the plan view.

4. Lighting device according to any of the preceding claims, wherein a second light source is arranged at the other end (3) of the light guide (1) to input light into said light guide.

5. Lighting device according to any of the preceding claims, wherein an LED is used as a light source (4).

6. Lighting device according to any of the preceding claims, wherein the adapter (11, 12) covers the lower portion (7) of the light guide (1), as seen in plan view, at the-crossover (6).

7. Lighting device according to claim 6, wherein the adapter (11, 12) comprises a film.

8. Lighting device according to any of claims 1 to 5, wherein the adapter (11, 12) is transparent in part and interconnects two portions (9, 10) of the light guide (1) which are located in proximity to the crossover (6).

9. Steering wheel for a motor vehicle, comprising a lighting device according to any of the preceding claims:

10. Assistance system for a motor vehicle comprising a lighting device according to any of claims 1 to 8 for generating an optical indication, in particular a warning.

## Revendications

1. Dispositif d'éclairage pour un véhicule automobile comprenant :
- un guide d'onde (1) et
- une source de lumière (4), qui est couplée à une extrémité (2) du guide d'onde (1), pour alimenter en lumière le guide d'onde (1),
**caractérisé en ce que** :
- le guide d'onde (1) forme au moins en vue de dessus une forme confinée et, à cet effet, deux sections (7, 8) du guide d'onde se croisent à une interception (6) et
- un élément d'adaptation (11, 12) est agencé à l'interception (6), avec lequel élément une intensité lumineuse, qui peut être mesurée dans une direction à l'opposé de la vue de dessus, peut être adaptée dans une zone de l'interception (6) à l'intensité lumineuse d'une autre section du guide d'onde.

2. Dispositif d'éclairage selon la revendication 1, dans lequel la forme confinée correspond à un anneau circulaire.

3. Dispositif d'éclairage selon la revendication 1 ou la revendication 2, dans lequel le guide d'onde (1) est constitué d'un matériau allongé, qui est courbé dans la forme confinée en vue de dessus.

4. Dispositif d'éclairage selon l'une quelconque des revendications précédentes, dans lequel il est aménagé sur l'autre extrémité (3) du guide d'onde (1) une seconde source de lumière pour y injecter de la lumière.

5. Dispositif d'éclairage selon l'une quelconque des revendications précédentes, dans lequel on utilise comme source de lumière (4) une diode électroluminescente (DEL).

6. Dispositif d'éclairage selon l'une quelconque des revendications précédentes, dans lequel l'élément d'adaptation (11, 12) couvre la section (7) du guide d'onde (1) se trouvant en dessous en vue de dessus au niveau de l'interception (6).

7. Dispositif d'éclairage selon la revendication 6, dans lequel l'élément d'adaptation (11, 12) comprend une feuille.

8. Dispositif d'éclairage selon l'une quelconque des revendications 1 à 5, dans lequel l'élément d'adaptation (11, 12) est en partie transparent et relie l'une à l'autre deux sections (9, 10) du guide d'onde (1), qui se trouvent au voisinage de l'interception (6).

9. Volant de direction pour un véhicule automobile comprenant un dispositif d'éclairage selon l'une quelconque des revendications précédentes.

10. Système d'assistance pour un véhicule automobile comprenant un dispositif d'éclairage selon l'une quelconque des revendications 1 à 8 pour produire une indication optique, en particulier une indication d'avertissement.
